# EUROPÄISCHE PATENTSCHRIFT

(11) **EP 2 683 634 B1**
(45) Veröffentlichungstag und Bekanntmachung des Hinweises auf die Patenterteilung: **06.09.2017**
(21) Anmeldenummer: 12706486.3
(22) Anmeldetag: 29.02.2012
(51) Int. Cl.: B65G 49/04

(54) **TAUCHBEHANDLUNGSANLAGE FÜR FAHRZEUGKAROSSERIEN UND VERFAHREN ZUM BETREIBEN EINER SOLCHEN**
DIPPING-TREATMENT INSTALLATION FOR VEHICLE BODIES, AND A METHOD FOR OPERATING SAME
INSTALLATION DE TRAITEMENT PAR IMMERSION POUR CARROSSERIES DE VÉHICULES, ET PROCÉDÉ POUR FAIRE FONCTIONNER UNE TELLE INSTALLATION

(30) Priorität: 09.03.2011 DE 102011013415
(43) Veröffentlichungstag der Anmeldung: 15.01.2014
(73) Patentinhaber: Eisenmann SE, 71032 Böblingen (DE)
(72) Erfinder: TIETZE, Michael, 71065 Sindelfingen (DE); SCHULZE, Herbert, 71134 Aidlingen (DE)
(74) Vertreter: Ostertag & Partner Patentanwälte mbB
(86) Internationale Anmeldenummer: PCT/EP2012/000867
(87) Internationale Veröffentlichungsnummer: WO 2012/119716

(56) Entgegenhaltungen:
- EP-A1- 1 642 671
- EP-A1- 1 741 646
- DE-A1- 2 527 829
- DE-A1-102010 005 314
- JP-A- 2000 135 477
- JP-A- 2001 308 160
- US-A1- 2007 212 941
- "AUTOMATIC CLEANING SYSTEM", IBM TECHNICAL DISCLOSURE BULLETIN, INTERNATIONAL BUSINESS MACHINES CORP. (THORNWOOD), US, Bd. 32, Nr. 4B, 1. September 1989 (1989-09-01), Seite 378/379, XP000066940, ISSN: 0018-8689

## Beschreibung

Die Erfindung betrifft eine Tauchbehandlungsanlage für Fahrzeugkarosserien mit
a) mindestens einem Tauchbecken, welches mit einer Behandlungsflüssigkeit füllbar ist, in welche die zu behandelnden Fahrzeugkarosserien eingetaucht werden können;
b) einem Fördersystem, welches die zu behandelnden Fahrzeugkarosserien an das Tauchbecken heran, in den Innenraum
des Tauchbeckens hinein, aus dem Tauchbecken heraus und von diesem wegbewegen kann und welches wenigstens eine Transporteinheit umfasst, die eine Befestigungseinrichtung mit sich führt, über welche die Fahrzeugkarosserie mit der Transporteinheit koppelbar ist.

Außerdem betrifft die Erfindung ein Verfahren zum Betreiben einer Tauchbehandlungsanlage für Fahrzeugkarosserien, bei welchem zu behandelnde Fahrzeugkarosserien mittels eines Fördersystems an ein Tauchbecken heran, in den Innenraum des Tauchbeckens hinein, aus dem Tauchbecken heraus und von diesem wegbewegt werden.

Eine derartige Tauchbehandlungsanlage in der speziellen Form einer elektrophoretischen Tauchlackieranlage ist aus der DE 101 03 837 B4 bekannt. Dort sind Transporteinheiten in Form von Transportwagen vorhanden, die auf einem Schienensystem oberhalb von hintereinander angeordneten Tauchbecken entlang einer vorgegebenen Fahrbahn verfahren werden. Die Transportwagen haben jeweils einen Schwenkarm, der an einem Ende um eine mit dem Transportwagen verfahrende erste Drehachse verschwenkbar ist und am anderen Ende über eine zweite Drehachse die Befestigungseinrichtung trägt, an welcher die zu behandelnde Fahrzeugkarosserie befestigt ist.

Diese bekannte Tauchlackieranlage weist eine außerordentlich große Variabilität in den erzielbaren Bewegungskinematiken sowie hohe Flexibilität auf. Dies muss allerdings mit einem nicht unerheblichen apparativen Aufwand erkauft werden, da die verschiedenen, die Befestigungseinrichtung und damit den zu lackierenden Gegenstand tragenden Bauelemente verhältnismäßig hohen Belastungen ausgesetzt sind.

Eine Flexibilität bei der Anordnung der Tauchbecken ist bei dieser bekannten Tauchbehandlungsanlage jedoch nur eingeschränkt vorhanden, da die Fahrzeugkarosserien der vorgegebenen Fahrbahn der Transportwagen folgen müssen. Dementsprechend ist auch die Reihenfolge recht starr vorgegeben, in der die entlang der Fahrbahn hintereinander angeordneten Tauchbecken von den Fahrzeugkarosserien durchlaufen werden müssen. DE 25 27 829 beschreibt eine gattungsgemäße Tauchbehandlungsanlage. Die Aufgabe der Erfindung besteht darin, eine Tauchbehandlungsanlage sowie ein Verfahren der eingangs genannten Art bereitzustellen, bei denen unter Beibehaltung einer ausreichend großen Variabilität der Bewegungskinematik der apparative Aufwand reduziert und die Flexibilität des Behandlungsablaufes erhöht ist.

Diese Aufgabe wird bei einer Tauchbehandlungsanlage der eingangs genannten Art durch die Merkmale nach Anspruch 1 gelöst. Die Erfindung beruht auf der Erkenntnis, dass eine Fahrzeugkarosserie trotz ihres hohen Gewichts sicher mit einem mehrachsigen Förderroboter gehandhabt werden kann. Eine Fahrzeugkarosserie kann je nach Bauart mehr als 500kg wiegen. Wenn die Fahrzeugkarosserie bei ihrem Durchlauf durch die Tauchbehandlungsanlage zudem auf einem Förderskid befestigt ist, erhöht sich die Masse der zu bewegenden Teile nochmals entsprechend um die Masse des zugehörigen Förderskids, die etwa bei 150kg liegt.

Dadurch, dass ein mehrachsiger Förderroboter als Transporteinheit für die Fahrzeugkarosserie verwendet wird, ist die Anordnung der Tauchbecken nicht mehr derart streng an die Fahrbahn der Transporteinheiten gebunden, wie es beim Stand der Technik der Fall ist. Die Tauchbecken können nun flexibel neben der Fahrbahn positioniert sein, solange ein fragliches Tauchbecken sich noch im Arbeitsradius eines Förderroboters befindet. Die Reihenfolge, in der Tauchbecken von einer Fahrzeugkarosserie durchlaufen werden, kann fast beliebig variiert werden. Dabei kann eine Fahrzeugkarosserie auf Grund der Bewegungsfreiheitsgrade eines mehrachsigen Förderroboters nach einem Tauchgang in einem ersten Tauchbecken zu einem zweiten Tauchbecken bewegt werden, ohne dass die Fahrzeugkarosserie dabei über ein nicht genutztes Tauchbecken hinweg geführt werden muss. Hierdurch ist die Gefahr verringert, dass Behandlungsflüssigkeit von einem Tauchbecken in das nicht genutzte Tauchbecken von der Fahrzeugkarosserie abtropft.

Es ist insbesondere günstig, wenn die Befestigungseinrichtung derart eingerichtet ist, dass sie unmittelbar mit einer Fahrzeugkarosserie koppelbar ist und/oder mit einer Tragstruktur koppelbar ist, welche mit der Fahrzeugkarosserie verbunden ist. Abhängig von der Art der zu behandelnden Fahrzeugkarosserie kann es besser sein, wenn diese unmittelbar von dem Förderroboter aufgenommen wird. In anderen Fällen kann es von Vorteil sein, wenn die Fahrzeugkarosserie beispielsweise auf einem Förderskid verbleibt.

Ein guter Bewegungsspielraum des Förderroboters ist gegeben, wenn dieser neben der Verfahrachse zusätzlich wenigstens vier Bewegungsachsen aufweist. Erfindungsgemäß weißt der Roboterarm ein Armgelenk auf, wobei dieses eine fünfte Bewegungsachse definiert.

Die hoher Förderflexibilität durch den Förderroboter kann insbesondere dann ausgespielt werden, wenn mehrere Tauchbecken vorhanden sind, welche auf einer Seite oder zu beiden Seiten neben einer Fahrbahn des Förderroboters angeordnet sind.

Wenn eine bezogen auf die Fahrbahn tiefstliegende horizontale Bewegungsachse des Förderroboters oberhalb des oberen Randes des oder der Tauchbecken angesiedelt ist, kann der Förderroboter die Fahrzeugkarosserie vorteilhaft von oben zu den Tauchbecken führen. Der Förderroboter muss also vorteilhaft keinen Beckenrand übergreifen.

Es kann besonders von Vorteil sein, wenn
a) wenigstens eine erste Behandlungszone mit einer ersten Fahrbahn und einem ersten Förderroboter und eine zweite Behandlungszone mit einer zweiten Fahrbahn und einem zweiten Förderroboter vorhanden sind, denen jeweils wenigstens ein Tauchbecken zugeordnet ist;
b) zwischen der ersten und der zweiten Behandlungszone eine Übergabeeinrichtung angeordnet ist, mittels welcher eine Fahrzeugkarosserie von dem ersten Förderroboter an den zweiten Förderroboter übergeben werden kann.

In diesem Fall können in einer Behandlungszone beispielsweise Tauchbecken zusammengefasst werden, die zu einem übergeordneten Behandlungsziel zählen. Beispielsweise müssen zum Reinigen und Entfetten, zum Phosphatieren und bei der kataphoretischen Tauchlackierung, die kurz als KTL bezeichnet wird, jeweils mehrere Tauchbäder von einer Fahrzeugkarosserie durchlaufen werden. Die entsprechenden Tauchbäder können so entsprechend in einer Reinigungs- und Entfettungszone, einer Phosphatierungszone und einer KTL-Zone angeordnet sein.

Die durch den Förderroboter erreichte Flexibilität bei der Anordnung der Tauchbecken kann zum Beispiel genutzt werden, wenn die Tauchbecken derart angeordnet sind, dass ihre Becken-Längsrichtung in einem Winkel zur Verfahrachse des Förderroboters verläuft, der anders als 0° ist.

Insbesondere kann der Winkel der Becken-Längsrichtung zur Verfahrachse des Förderroboters 90° betragen. Eine solche Queranordnung von Tauchbecken gegenüber der Fahrbahn einer Fördereinheit ist beim Stand der Technik nicht möglich.

Die oben genannte Aufgabe wird bei einem Verfahren zum Betreiben einer Tauchbehandlungsanlage für Fahrzeugkarosserien der eingangs genannten Art entsprechend dadurch gelöst, dass zu behandelnde Fahrzeugkarosserien mittels wenigstens eines mehrachsigen Förderroboters, der entlang einer Verfahrachse verfahrbar ist, zumindest von einem ersten Tauchbecken zu einem zweiten Tauchbecken transportiert werden.

Der Ein- und Austauchvorgang der Fahrzeugkarosserie in die Behandlungsflüssigkeit hinein oder aus dieser heraus kann auch auf eine andere Weise ohne den Förderroboter erfolgen.

Nachstehend werden Ausführungsbeispiele der Erfindung anhand der Zeichnungen näher erläutert. In diesen zeigen:
- Figur 1: eine Veranschaulichung verschiedener Komponenten einer Tauchbehandlungsanlage und deren Arbeitsweise in einer schematischen Seitenansicht eines Abschnitts der Tauchbehandlungsanlage;
- Figur 2: eine Layoutansicht eines Abschnitts eines ersten Ausführungsbeispiels einer Tauchbehandlungsanlage;
- Figur 3: eine Layoutansicht eines zweiten Ausführungsbeispiels einer Tauchbehandlungsanlage;
- Figur 4: eine Layoutansicht eines dritten Ausführungsbeispiels einer Tauchbehandlungsanlage.

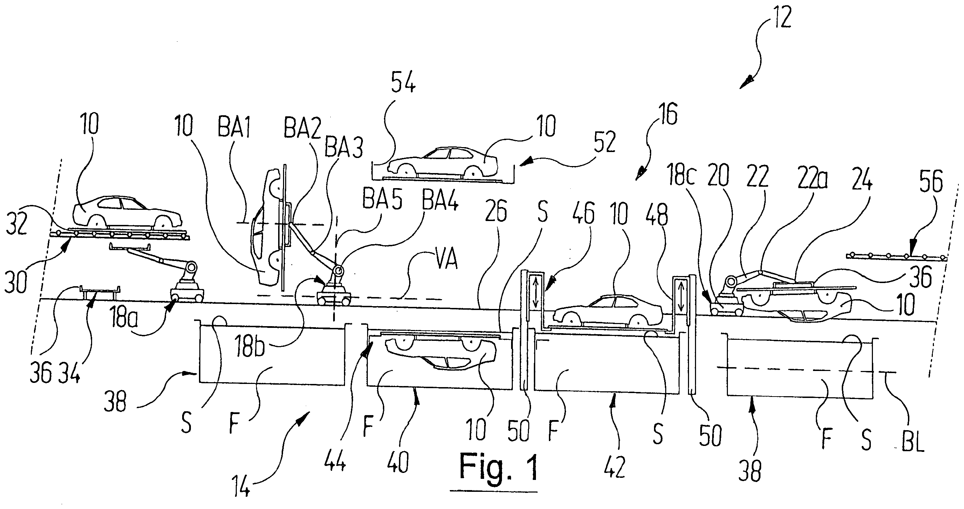

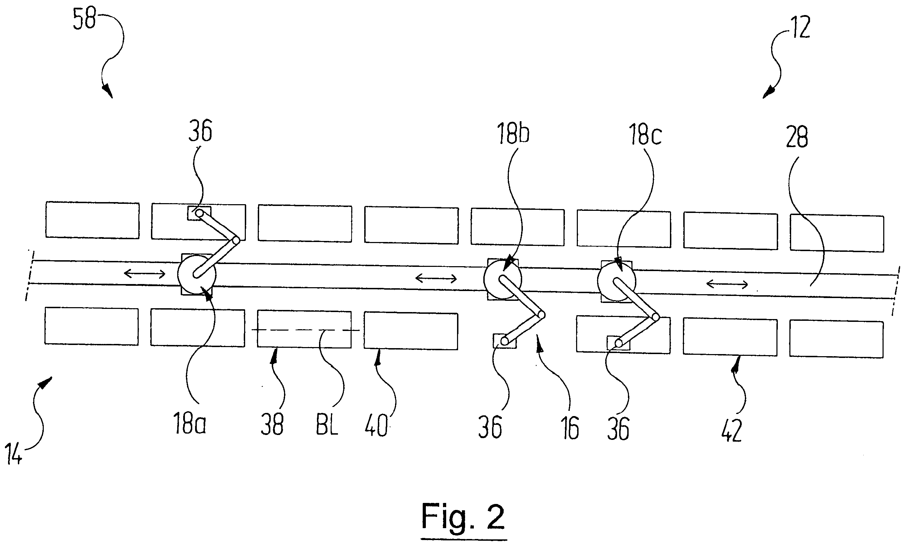

Zunächst wird auf Figur 1 Bezug genommen. Dort sind verschiedene Komponenten zur Tauchbehandlung von Fahrzeugkarosserien 10 gezeigt, die in unterschiedlicher Anordnung in einer insgesamt mit 12 bezeichneten Tauchbehandlungsanlage vorhanden sind. Hierauf wird im Zusammenhang mit den Figuren 2 bis 4 weiter unten eingegangen.

Die Tauchbehandlungsanlage 12 umfasst eine Tauchbeckenanordnung 14, durch welche die Fahrzeugkarosserien 10 mittels eines insgesamt mit 16 bezeichneten Fördersystems geführt wird.

Hierzu umfasst das Fördersystem 16 eine Anzahl von Fördereinheiten in Form von mehrachsigen Förderroboter 18 mit jeweils einem Fahrwerk 20 und einen Roboterarm 22, der an seinem vom Fahrwerk abliegenden Ende ein Roboterhandstück 24 trägt, wie es an und für sich bekannt ist. Vorliegend ist das Roboterhandstück 24 als Greiferhandstück ausgebildet.

In Figur 1 sind drei Förderroboter 18a, 18b, 18c gezeigt, bei denen der Übersichtlichkeit halber nur der Förderroboter 18c mit weiteren Bezugszeichen versehen ist.

Die Förderroboter 18 weisen in an und für sich bekannter Art und Weise sechs Bewegungsachsen auf, die mit den Bezugszeichen BA1 bis BA5 und VA bezeichnet und ebenfalls der Übersichtlichkeit halber nur beim Förderroboter 18b gekennzeichnet sind.

Die Achse VA bildet die Verfahrachse des Förderroboters 18, entlang dieser auf einer Fahrbahn verfahren werden kann, die durch eine Laufbahn 26 vorgegeben ist. Dementsprechend weist jeder Förderroboter 18 neben seiner Verfahrachse VA fünf weitere Bewegungsachsen BA1 bis BA5 auf. Die senkrecht aufeinander stehenden Bewegungsachsen BA1 und BA2 sind dabei dem Roboterhandstück 24 zugeordnet. Die horizontale Bewegungsachse BA3 ist durch ein Gelenk 22a des Roboterarms 22 vorgegeben, wodurch dieser als Knickarm ausgebildet ist. Der Roboterarm 22 seinerseits wird erfindungsgemäß am vom Roboterhandstück 24 abliegenden Ende um die horizontale Bewegungsachse B4 nach oben und unten verschwenkt und um die vertikale Bewegungsachse B5 gegenüber dem Fahrwerk 20 verdreht.

Bei einer nicht eigens gezeigten Abwandlung können die Förderroboter 18 auch lediglich fünfachsig ausgebildet sein, wobei die Bewegungsachse BA3 im Roboterarm 22 entfällt und dieser nicht gelenkig, sondern starr ausgebildet ist. In diesem Fall weist der Förderroboter 18 neben der Verfahrachse VA somit vier weitere Bewegungsachsen auf. Die geringere Bewegungsfreiheit gegenüber einem sechsachsigen Förderroboter beim Positionieren einer Fahrzeugkarosserie kann durch ein angepasstes Verfahren entlang der Verfahrachse VA ausgeglichen werden.

Die höchste Beweglichkeit wird erreicht, wenn der Förderroboter sieben Bewegungsachsen aufweist, wie es ebenfalls an und für sich bekannt ist. Im Vergleich zum sechsachsigen Förderroboter 18 ist dann eine weitere Bewegungsachse beim Roboterhandstück 24 vorhanden, die zumindest achsparallel zur Längsachse des Armteils des Roboterarms 22 verläuft, der das Roboterhandstück 24 trägt.

In Figur 1 läuft der Förderroboter 18 mit am Fahrwerk 20 gelagerten Laufrollen auf der Laufbahn 26 ab. In den Figuren 2 bis 4 ist als Abwandlung gezeigt, dass das Fahrwerk 20 auf jeweils einer Führungsschiene 28 verfahren werden kann, die entsprechend eine jeweilige Fahrbahn für einen zugehörigen Förderroboter 18 vorgibt.

Die Fahrzeugkarosserien 10 kommen über einen Zuführförderer 30 zur Tauchbehandlungsanlage 12, der beim vorliegenden Ausführungsbeispiel als Rollenbahnförderer veranschaulicht ist, wie er aus dem Stand der Technik bekannt ist. Damit die Fahrzeugkarosserien 10 mit diesem Zuführ-Rollenbahnförderer 30 gefördert werden können, sind sie in bekannter Art und Weise auf jeweils einem so genannten Skid 32 befestigt, der auf dem Zuführ-Rollenbahnförderer 30 abläuft.

Beim vorliegenden Ausführungsbeispiel verbleiben die Fahrzeugkarosserien 10 auf dem jeweiligen Skid 32 befestigt, wenn sie durch die Tauchbehandlungsanlage 12 geführt werden. Damit die Förderroboter 18 ein Skid 32 mit der darauf befestigten Fahrzeugkarosserie 10 aufnehmen können, ist dem Zuführ-Rollenbahnförderer 30 eine Adapterstation 34 zugeordnet, auf welcher Adaptereinheiten 36 bereitgestellt werden, die einerseits von dem Greiferhandstück 24 des Förderroboters 18 gegriffen und andererseits mit dem Skid 32 verbunden werden können.

Bei einer Abwandlung können die Fahrzeugkarosserien 10 auch als solche und ohne Skid 32 durch die Tauchbehandlungsanlage 12 geführt werden. In diesem Fall sind die Adaptereinheiten 36 derart ausgebildet, dass sie einerseits von dem Roboterhandgelenk 24 gegriffen und andererseits unmittelbar mit der Fahrzeugkarosserie 10 verbunden werden können.

Bei einer weiteren Abwandlung kann das Greiferhandstück 24 des Förderroboters 18 auch so an eine zu behandelnde Fahrzeugkarosserie 10 angepasst sein, dass diese direkt von dem Förderroboter 18 aufgenommen werden kann.

Alternativ zu dem Greifhandstück 24 kann ein Förderroboter 18 auch ein Handstück aufweisen, welches nicht als Greifer ausgebildet ist und an welchem eine Adaptereinheit 36, ein Skid 32 oder eine Fahrzeugkarosserie 10 befestigt werden kann.

Somit bilden entweder das Handstück 24 oder das Handstück 24 in Verbindung mit dem Adapter 36 eine Befestigungseinrichtung, welche die Fahrzeugkarosserie 10 - entweder unmittelbar oder mittelbar über den Skid 32 - mit dem Förderroboter 18 koppelt.

Die Adaptereinheiten 36 können als starre Verbindungsstrukturen ausgebildet sein, die an Skids 32 oder Fahrzeugkarosserien 10 einer bestimmten Bauart angepasst sind. Alternativ können die Adaptereinheiten 36 aber auch als in ihrer Geometrie veränderbare Koppeleinheiten ausgebildet sein, so dass sie manuell oder über den Förderroboter 18 gesteuert an Skids 32 oder Fahrzeugkarosserien 10 unterschiedlicher Bauart angepasst werden können. In diesem Fall können die Adaptereinheiten 36 stets mit dem Roboterhandstück 24 verbunden sein und müssen nicht ausgetauscht werden, wenn ein von der Bauart eines vorhergehenden Skids 32 abweichender Skids 32 oder eine von der Bauart einer vorhergehenden Fahrzeugkarosserie 10 abweichende Fahrzeugkarosserie 10 vom Förderroboter 18 aufgenommen werden soll.

Die Tauchbeckenanordnung 14 umfasst Tauchbecken unterschiedlicher Bauart, die auf unterschiedliche Art und Weise mit den Förderrobotern 18 zusammenarbeiten, wobei in Figur 1 beispielhaft zwei Standard-Tauchbecken 38, ein Auflage-Tauchbecken 40 und ein Hub-/Senk-Tauchbecken 42 veranschaulicht sind.

Die Tauchbecken 38, 40 und 42 der Tauchbehandlungsanlage 12 sind jeweils bis zu einem Flüssigkeitsspiegel S mit einer Behandlungsflüssigkeit F gefüllt, deren Art und Zusammensetzung in jedem Tauchbecken 38, 40, 42 jeweils von der Art der gewünschten Behandlung abhängt, die durch ein bestimmtes Tauchbad erfolgen soll, wie es eingangs erläutert wurde.

Die in Figur 1 ganz links und ganz rechts angeordneten Standard-Tauchbecken 38 weisen im Gegensatz zu den Tauchbecken 42 und 44 keine weiteren und dem Fördersystem 16 zuzuordnenden Komponenten auf. Die zu behandelnden Fahrzeugkarosserien 10 werden mittels eines der Förderroboter 18 an das Tauchbecken 40 heran, in den Innenraum des Tauchbeckens 40 hinein, aus dem Tauchbecken 40 heraus und von diesem wegbewegt, ohne dass die Fahrzeugkarosserie 10 bei diesem Vorgang von dem Förderroboter 18 getrennt wird oder werden muss.

Beim Ein- und Austauchvorgang wird die Fahrzeugkarosserie 10 Dach unten geführt. Durch die Bewegungsfreiheitsgrade des Roboterarms 22 mit dem Roboterhandstück 24 können die Fahrzeugkarosserien 10 mit variablen Bewegungskinematiken durch die Tauchbecken 38 geführt werden. Der jeweils auszuführende Bewegungsablauf kann dabei einerseits von der Art der zu behandelnden Fahrzeugkarosserie und andererseits von der Art des Tauchbades abhängen und individuell vorgegeben werden.

Das Auflage-Tauchbecken 40 umfasst eine Halteeinrichtung 44, auf welche ein Skid 32 aufgelegt werden kann, so dass die zugehörige Fahrzeugkarosserie 10 Dach unten vollständig in die Behandlungsflüssigkeit F im Auflage-Tauchbecken 40 eintaucht, wie es in Figur 1 gezeigt ist. Im einfachsten Fall umfasst die Halteinrichtung 44 zwei horizontale Tragstreben, die an der Innenseite der Stirnwände des Tauchbeckens 40 angebracht sind. Die Halteeinrichtung 44 jedes Auflage-Tauchbeckens 40 ist somit eine Komponente des Fördersystems 16.

In diesem Fall wird die Fahrzeugkarosserie 10 mit Skid 32 beim Eintauchvorgang von dem Förderroboter 18 über Kopf gedreht und in die Behandlungsflüssigkeit F im Auflage-Tauchbecken 40 eingetaucht, bis der Skid 32 auf der Halteeinrichtung 44 zu liegen kommt. Eine entsprechende ÜberKopf-Anordnung einer Fahrzeugkarosserie 10 ist in Figur 1 beim Förderroboter 18c gezeigt.

Dann kann das Roboterhandstück 24 oder die Adaptereinheit 36 von dem Skid 32 getrennt werden und der Förderroboter 18 andere Aufgaben durchführen, während die Fahrzeugkarosserie 10 in dem Auflage-Tauchbecken 40 verweilt. Wenn die Fahrzeugkarosserie 10 die für die entsprechende Behandlung benötigte Zeit in der Behandlungsflüssigkeit F verbracht hat, wird der Skid 32 von demselben oder einem anderen Förderroboter 18 aufgenommen und die Fahrzeugkarosserie 10 aus dem Auflage-Tauchbecken 40 heraus bewegt.

Wenn eine Adaptereinheit 36 verwendet wird, können die Förderroboter 18 eine Fahrzeugkarosserie 10 jeweils in die Behandlungsflüssigkeit F in einem Standard-Tauchbecken 38 oder einem Auflage-Tauchbecken 40 eintauchen, ohne dass das Handstück 24 des Förderroboters 18 ebenfalls in die jeweilige Behandlungsflüssigkeit F eintauchen muss.

Das Hub-/Senk-Tauchbecken 42 umfasst eine Hub-/Senkeinrichtung 46 mit einem für Skids 32 ausgelegten Traggestell 48. Dieses kann in vertikalen Führungsschienen 50 an den Stirnwänden des Hub-/Senk-Tauchbeckens 42 in dessen Innenraum abgesenkt oder aus diesem angehoben werden, was in Figur 1 durch Doppelpfeile angedeutet ist. Hierzu ist ein nicht eigens gezeigter Antrieb vorhanden. Auch die Hub-/Senkeinrichtung 46 jedes vorhandenen Hub-/Senk-Tauchbeckens 42 ist eine Komponente des Fördersystems 16.

Beim vorliegenden Ausführungsbeispiel ist das Traggestell 48 so an das oder die verwendeten Skids 32 angepasst, dass die Fahrzeugkarosserie 10 Dach oben aufgenommen werden kann. Beim Eintauchvorgang übergibt der Förderroboter 18 den Skid 32 mit der Fahrzeugkarosserie 10 oberhalb des Flüssigkeitsspiegels S der Behandlungsflüssigkeit F an das Traggestell 48 und gibt dann den Skid 32 automatisch frei oder wird von diesem getrennt.

Das Traggestell 48 wird dann zusammen mit dem Skid 32 und der darauf befestigten Fahrzeugkarosserie 10 abgesenkt, so dass die Fahrzeugkarosserie 10 in die Behandlungsflüssigkeit F im Hub-/Senk-Tauchbecken 40 eintaucht. Nach der gebotenen Verweildauer in der Behandlungsflüssigkeit F wird das Traggestell 48 wieder nach oben gefahren und die Fahrzeugkarosserie 10 aus der Behandlungsflüssigkeit über deren Flüssigkeitsspiegel S hinaus angehoben. Dann wird der Skid 32 wieder von einem der Förderroboter 18 aufgenommen und die Fahrzeugkarosserie 10 von dem Hub-/Senk-Tauchbecken 40 weg bewegt.

Nach allen Tauchbehandlungen in einem der Tauchbecken 38, 40 oder 42 verbleibt die behandelte Fahrzeugkarosserie 10 jeweils noch eine gewisse Zeit oberhalb des Flüssigkeitsspiegels S der jeweiligen Behandlungsflüssigkeit, damit die jeweilige Behandlungsflüssigkeit F von der Fahrzeugkarosserie 10 abtropfen kann. Dies ist am Beispiel des Förderroboters 18c gezeigt, welcher eine Fahrzeugkarosserie 10 in einer Dach unten Stellung über dem Tauchbecken 38 hält.

Entlang der Fahrbahn 26 oder 28 der Förderroboter 18 können Pufferzonen vorgesehen sein, von denen in Figur 1 beispielhaft eine Pufferzone 52 gezeigt ist. Beim vorliegenden Ausführungsbeispiel umfasst die Pufferzone 52 eine Trageinrichtung 54, die ähnlich konzipiert ist, wie die Halteeinrichtung 44 der Auflage-Tauchbecken 40 und einen Skid 32 mit darauf befestigter Fahrzeugkarosserie 10 lagern kann. Die Trageinrichtung 54 befindet sich dabei auf einem Höhenniveau oberhalb der Fahrbahn 26 der Förderroboter 18 und ist von nicht eigens gezeigten Stahlbauten getragen. Alternativ kann die Trageinrichtung 54 auch neben der Fahrbahn 18 auf einem tiefer liegenden Niveau angesiedelt sein. In diesem Fall nimmt die Pufferzone 52 jedoch einen Raum ein, der von einem Tauchbecken genutzt werden könnte. Eine solche Pufferzonen 52 kann auch mehrere Trageinrichtungen 54 umfassen, so dass in der entsprechenden Pufferzone 52 auch mehr als eine Fahrzeugkarosserie 10 zwischengelagert werden kann.

Mit Hilfe einer oder mehrerer Pufferzonen 52 ist es möglich, dass jede Fahrzeugkarosserie 10 in einer individuellen Reihenfolge durch die vorhandenen Tauchbecken 38, 40, 42 geführt werden kann. Für jede einzelne Fahrzeugkarosserie 10 kann ein individueller Behandlungsablauf in einer Zentralsteuerung abgelegt sein, welche den Förder- und Behandlungsprozess koordiniert.

Wenn eine Fahrzeugkarosserie 10 alle notwendigen Tauchbecken 38, 40, 42 durchlaufen hat, wird sie an einen Abgabeförderer 56 übergeben, der wie der Zuführförderer 30 beispielsweise als Rollenbahnförderer ausgebildet sein kann. Von dort werden die Fahrzeugkarosserien 10 dann zu weiteren, der Tauchbehandlungsanlage 12 nachfolgenden Behandlungsstationen transportiert.

Die jeweilige Fahrbahn 26 oder 28 der Förderroboter 18 ist auf einem Höhenniveau angesiedelt, das im Bereich des oberen Randes der Tauchbecken 38, 40 bzw. 42 liegt. In der Praxis hat sich bewährt, wenn die Fahrbahn 26, 28 jeweils oberhalb des oberen Randes der Tauchbecken 38, 40, 42 angeordnet ist.

Damit der Förderroboter 18 mit seinem Roboterarm 22 keinen Beckenrand übergreifen muss, ist allgemein ausgedrückt die bezogen auf die Fahrbahn 26 bzw. 28 tiefstliegende horizontale Bewegungsachse des Förderroboters, beim vorliegenden Ausführungsbeispiel also die Bewegungsachse BA4 des Förderroboters 18, oberhalb des oberen Randes der Tauchbecken 38, 40, 42 angesiedelt. Dies kann entweder durch eine entsprechende Höhenlage der Fahrbahn 26 bzw. 28 oberhalb der Beckenränder oder durch eine geeignete Ausbildung des Förderroboters 18 erreicht werden, bei der die Fahrbahn 26 bzw. 28 auch unterhalb des Höhenniveaus der oberen Ränder der Tauchbecken 38, 40, 42 verlaufen kann.

So können die Förderroboter 18 die Tauchbecken 38, 40, 42 gut erreichen und die Fahrzeugkarosserien 10 von oben in ihre Behandlungsposition in den Tauchbecken 38, 40, 42 bringen.

Grundsätzlich dienen die Förderroboter 18 des Fördersystems 16 dazu, die Fahrzeugkarosserien 10 zumindest von einem ersten Tauchbecken zu einem zweiten Tauchbecken zu transportieren. Wenn beispielsweise beim Behandlungsablauf zwei Hub-/Senk-Tauchbecken 42 mit jeweils einer Hub-/Senkeinrichtung 46 aufeinander folgen, sind die Förderroboter 18 nicht mit dem Eintauchen und Austauchen der zu behandelnden Fahrzeugkarosserie 10 befasst, sondern verbringen die betreffende Fahrzeugkarosserie 10 lediglich von einem Hub-/Senk-Tauchbecken 42 zum Nächsten.

In den Figuren 2 bis 4 sind nun beispielhaft drei Layoutvarianten gezeigt, die veranschaulichen sollen, dass durch die Verwendung von mehrachsigen Förderrobotern 18 zum Transport von Fahrzeugkarosserien 10 in einer Tauchbehandlungsanlage 12 ein großer Freiraum in der räumlichen Anordnung von Tauchbecken 38, 40, 42 und deren Reihenfolge geschaffen ist.

In den Figuren 2 bis 4 ist der Übersichtlichkeit halber nur exemplarisch jeweils ein Tauchbecken 38, 40, 42 mit einem entsprechenden Bezugszeichen versehen. Jedes Tauchbecken 38, 40, 42 definiert eine Becken-Längsrichtung BL, die senkrecht zu zwei gegenüberliegenden Stirnwänden verläuft, die den größten Abstand voneinander haben und die in den Figuren 1 bis 4 jeweils lediglich beim einem Standard-Tauchbecken 38 gestrichelt gezeigt ist.

Figur 2 zeigt einen Anlagenabschnitt 58, in welchem drei Förderroboter 18a, 18b, 18c auf einer gemeinsam genutzten Führungsschiene 28 laufen. Die Förderroboter 18 können dabei derart auf der Führungsschiene 28 verfahren werden, dass sich zwei hintereinander angeordnete Förderroboter 18a und 18b bzw. 18b und 18c jeweils einen Teilabschnitt der Führungsschiene 28 überlappend nutzen. Auf diese Weise ist es möglich, dass z.B. ein erster Förderroboter 18, z.B. der Förderroboter 18a, eine Fahrzeugkarosserie 10 zum Tauchbecken 40 transportiert und auf dessen Halteeinrichtung 44 auflegt, diese Fahrzeugkarosserie 10 jedoch nach Abschluss der Tauchbehandlung in dem Tauchbecken 40 von einem zweiten Förderroboter 18, z.B. dem Förderroboter 18b aufgenommen und zum nächsten Tauchbad gefördert wird.

Bei der Tauchbeckenanordnung 14 gemäß Figur 2 sind alle Tauchbecken 38, 40, 42 so angeordnet, dass ihre Becken-Längsrichtung BL weitgehend parallel zur geradlinigen Führungsschiene 28 und damit auch weitgehend parallel zur gemeinsamen Verfahrachse VA der Förderroboter 18 verläuft.

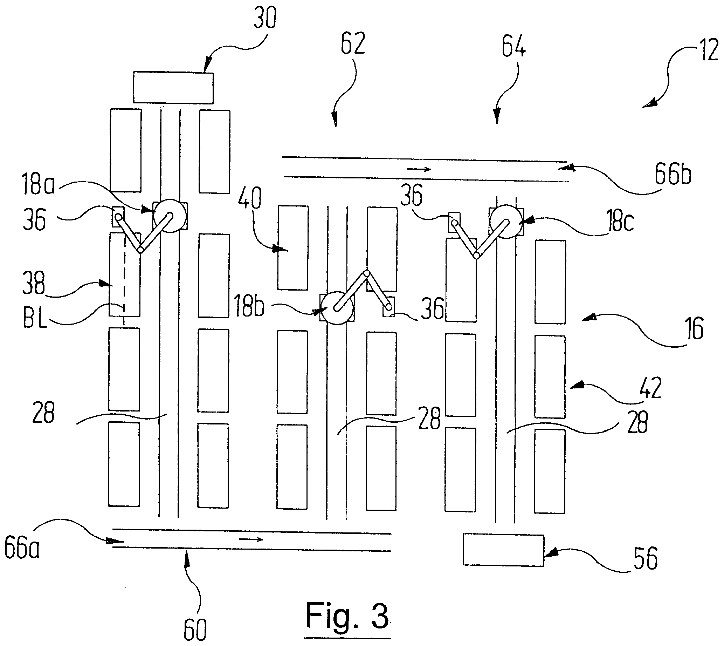

Diese Anordnung der Tauchbecken 38, 40, 42 ist auch bei der Layoutvariante gemäß Figur 3 gegeben. Dort sind jedoch drei Führungsschienen 28a, 28b, 28c vorhanden, die in drei Behandlungszonen 60, 62 und 64 verlaufen, die zwischen dem Zuführförderer 30 und dem Abgabeförderer 56 angeordnet sind. Auf jeder Führungsschiene 28a, 28b, 28c bewegt sich beim vorliegenden Ausführungsbeispiel jeweils nur ein einziger Förderroboter 18a, 18b bzw. 18c; es können jedoch auch entsprechend den obigen Erläuterungen mehrere Förderroboter 18 auf jeweils einer Führungsschiene 28a, 28b, 28c vorhanden sein.

Wie bereits eingangs angesprochen wurde, können die Behandlungszonen 60, 62 und 64 verschiedene Tauchbecken umfassen, die von einer Fahrzeugkarosserie 10 für ein übergeordnetes Behandlungsziel durchlaufen werden müssen. Die Behandlungszone 60 sei dementsprechend mit Tauchbecken 38, 40, 42 für eine Reinigung und ein Entfetten der Fahrzeugkarosserien 10, die Behandlungszone 62 mit Tauchbecken 38, 40, 42 für eine Phosphatierung und die Behandlungszone 64 mit Tauchbecken 38, 40, 42 für eine KTL bestückt.

Die Behandlungszonen 60 und 62 bzw. 62 und 64 sind durch jeweils einen Übergabeförderer 66a bzw. 66b miteinander verbunden, die z.B. als Rollenbahnförderer ausgebildet sein können. Stattdessen können auch Umsetzroboter vorhanden sein, die stationär sein und mit Zwischenauflagen für die Fahrzeugkarosserien 10 zusammenarbeiten oder verfahrbar sein können.

Wenn eine Fahrzeugkarosserie 10 die erste Behandlungszone 60 durchlaufen und alle dort vorgesehenen Tauchbäder absolviert hat, wird sie von dem Förderroboter 18a an den Übergabeförderer 66a übergeben, von diesem in den Zugriffbereich des Förderroboters 18b in der zweiten Behandlungszone 62 gefördert und dort von dem Förderroboter 18 aufgenommen. Entsprechend erfolgt mittels des Übergabeförderers 66b die Übergabe der Fahrzeugkarosserie 10 von der zweiten Behandlungszone 62 an die dritte Behandlungszone 64, wo die Fahrzeugkarosserie 10 von dem Förderroboter 18c aufgenommen und durch die Tauchbäder geführt wird.

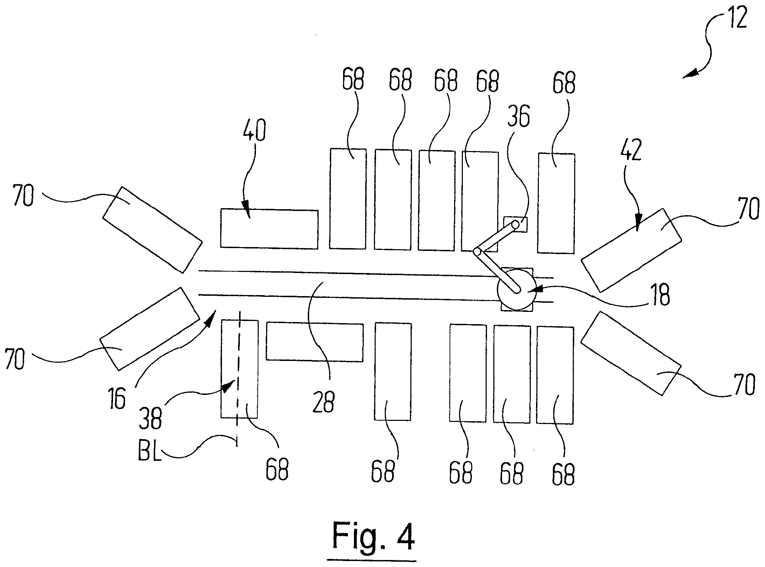

Bei der Layoutvariante gemäß Figur 4 ist wieder lediglich eine Führungsschiene 28 vorhanden, auf der sich ein einziger Förderroboter 18 bewegt. Dort sind einige Tauchbecken, die mit 68 bezeichnet sind, so angeordnet, dass ihre Becken-Längsrichtung BL in einem Winkel von 90° zur Verfahrachse VA des Förderroboters 18 verläuft. Andere Tauchbecken, die mit 70 bezeichnet und an den Stirnenden der Führungsschiene 28 positioniert sind, sind dagegen so angeordnet, dass ihre Becken-Längsrichtung BL in einem Winkel von etwa 60° zur Verfahrachse VA des Förderroboters 18 verläuft. Allgemein ausgedrückt können die Tauchbecken 38, 40, 42 derart angeordnet sein, dass ihre Becken-Längsrichtung in einem Winkel zur Verfahrachse VA des Förderroboters 18 verläuft, der anders als 0° ist.

Bei allen oben beschriebenen Layoutvarianten befinden sich Tauchbecken 38, 40, 42 zu beiden Seiten neben der durch die jeweils betrachtete Führungsschiene 28 vorgegebenen Fahrbahn der Förderroboter 18, bei der Layoutvariante nach Figur 4 darüber hinaus auch an den Stirnenden der dortigen Führungsschiene 28. Bei einer Abwandlung können die Tauchbecken 38, 40, 42 auch nur auf einer Seite neben der entsprechenden Fahrbahn angeordnet sein.

Insgesamt kann die Anordnung der Tauchbecken 38, 40, 42 in der Tauchbehandlungsanlage 12 verhältnismäßig frei an die örtlichen Gegebenheiten und daran angepasst werden, ob mehr Raum in der Breite der Anlage oder in Längsrichtung der Anlage zur Verfügung steht.

Bei einer nicht eigens gezeigten weiteren Abwandlung können auch Tauchbecken 38, 40, 42 übereinander angeordnet sein. In diesem Fall können gegebenenfalls auch mehrere Fahrbahnen, seien es Laufbahnen 26 oder Führungsschienen 28, übereinander angeordnet sein, die jeweils einer Tauchbeckenanordnung 14 auf einem bestimmten Höhenniveau zugeordnet sind und auf denen sich entsprechend Förderroboter 18 befinden. In diesem Fall können Fahrzeugkarosserien 18 auch von unten nach oben oder von oben nach unten übergeben werden, indem z.B. geeignete Pufferstationen zwischengeschaltet werden.

## Patentansprüche

1. Tauchbehandlungsanlage für Fahrzeugkarosserien mit
a) mindestens einem Tauchbecken (38, 40, 42), welches mit einer Behandlungsflüssigkeit (F) füllbar ist, in welche die zu behandelnden Fahrzeugkarosserien (10) eingetaucht werden können;
b) einem Fördersystem (16), welches die zu behandelnden Fahrzeugkarosserien (10) an das Tauchbecken (38, 40, 42) heran, in den Innenraum des Tauchbeckens (38, 40, 42) hinein, aus dem Tauchbecken (38, 40, 42) heraus und von diesem wegbewegen kann und welches wenigstens eine Transporteinheit (18) umfasst, die eine Befestigungseinrichtung (24; 24, 36) mit sich führt, über welche die Fahrzeugkarosserie (10) mit der Transporteinheit (18) koppelbar ist; wobei:
c) die wenigstens eine Transporteinheit (18) ein mehrachsiger Förderroboter (18) mit einem Fahrwerk (20) ist, welcher entlang einer Verfahrachse (VA) verfahrbar ist, **dadurch gekennzeichnet, dass** der Förderroboter (18) einen Roboterarm (22) mit einem Armgelenk (22a) umfasst, der die Befestigungseinrichtung (24; 24, 36) trägt, welche durch ein Roboterhandstück (24) oder durch ein Roboterhandstück (24) und einen Adapter (36) gebildet ist;
d) dem Roboterhandstück (24) zwei senkrecht aufeinander stehende Bewegungsachsen (BA1, BA2) zugeordnet sind;
e) eine Bewegungsachse (BA3) durch das Armgelenk (22a) vorgegeben ist;
f) der Roboterarm (22) am vom Roboterhandstück (24) abliegenden Ende um eine horizontale Bewegungsachse (BA4) nach oben und unten verschwenkbar und um eine vertikale Bewegungsachse (BA5) gegenüber dem Fahrwerk (20) verdrehbar ist.

2. Tauchbehandlungsanlage nach Anspruch 1, **dadurch gekennzeichnet, dass** die Befestigungseinrichtung (24; 24, 36) derart eingerichtet ist, dass sie unmittelbar mit einer Fahrzeugkarosserie (10) koppelbar ist und/oder mit einer Tragstruktur (32) koppelbar ist, welche mit der Fahrzeugkarosserie (10) verbunden ist.

3. Tauchbehandlungsanlage nach Anspruch 1 oder 2, **dadurch gekennzeichnet, dass** mehrere Tauchbecken (38, 40, 42) vorhanden sind, welche auf einer Seite oder zu beiden Seiten neben einer Fahrbahn (26; 28) des Förderroboters (18) angeordnet sind.

4. Tauchbehandlungsanlage nach einem der Ansprüche 1 bis 3, **dadurch gekennzeichnet, dass** eine bezogen auf die Fahrbahn (26; 28) tiefstliegende horizontale Bewegungsachse (BA4) des Förderroboters (18) oberhalb des oberen Randes des oder der Tauchbecken (38, 40, 42) angesiedelt ist.

5. Tauchbehandlungsanlage nach einem der Ansprüche 1 bis 4, **dadurch gekennzeichnet, dass**
a) wenigstens eine erste Behandlungszone (60, 62) mit einer ersten Fahrbahn (28a, 28b) und einem ersten Förderroboter (18a, 18b) und eine zweite Behandlungszone (62, 64) mit einer zweiten Fahrbahn (28b, 28c) und einem zweiten Förderroboter (18b, 18c) vorhanden sind, denen jeweils wenigstens ein Tauchbecken (38, 40, 42) zugeordnet ist;
b) zwischen der ersten und der zweiten Behandlungszone (60, 62, 64) eine Übergabeeinrichtung (66a, 66b) angeordnet ist, mittels welcher eine Fahrzeugkarosserie (10) von dem ersten Förderroboter (18a, 18b) an den zweiten Förderroboter (18b, 18c) übergeben werden kann.

6. Tauchbehandlungsanlage nach einem der Ansprüche 1 bis 5, **dadurch gekennzeichnet, dass** ein oder mehrere Tauchbecken (38, 40, 42), die jeweils eine Becken-Längsrichtung (BL) definieren, derart angeordnet sind, dass ihre Becken-Längsrichtung (BL) in einem Winkel zur Verfahrachse (VA) des Förderroboters (18) verläuft, der anders als 0° ist.

7. Tauchbehandlungsanlage nach Anspruch 6, **dadurch gekennzeichnet, dass** der Winkel der Becken-Längsrichtung (BL) zur Verfahrachse (VA) des Förderroboters (18) 90° beträgt.

8. Verfahren zum Betreiben einer Tauchbehandlungsanlage für Fahrzeugkarosserien, bei welchem zu behandelnde Fahrzeugkarosserien (10) mittels eines Fördersystems (16) an ein Tauchbecken(38, 40, 42) heran, in den Innenraum des Tauchbeckens (38, 40, 42) hinein, aus dem Tauchbecken (38, 40, 42) heraus und von diesem wegbewegt werden, wobei zu behandelnde Fahrzeugkarosserien (10) mittels wenigstens eines mehrachsigen Förderroboters (18) mit einem Fahrwerk (20), der entlang einer Verfahrachse (VA) verfahrbar ist, zumindest von einem ersten Tauchbecken (38, 40, 42) zu einem zweiten Tauchbecken (38, 40, 42) transportiert werden, **dadurch gekennzeichnet, dass** der Förderroboter einen Roboterarm (22) mit einem Armgelenk (22a) umfasst, wobei der Roboterarm (22) eine Befestigungseinrichtung (24; 24, 36) trägt, welche durch ein Roboterhandstück (24) oder durch ein Roboterhandstück (24) und einen Adapter (36) gebildet ist,
und wobei dem Roboterhandstück (24) zwei senkrecht aufeinander stehende Bewegungsachsen (BA1, BA2) zugeordnet sind, eine Bewegungsachse (BA3) durch das Armgelenk (22a) vorgegeben ist und der Roboterarm (22) am vom Roboterhandstück (24) abliegenden Ende um eine horizontale Bewegungsachse (BA4) nach oben und unten verschwenkbar und um eine vertikale Bewegungsachse (BA5) gegenüber dem Fahrwerk (20) verdrehbar ist.

## Claims

1. Dipping-treatment installation for vehicle bodies, comprising
a) at least one dipping basin (38, 40, 42) which is fillable with a treatment liquid (F) into which the vehicle bodies (10) to be treated can be dipped;
b) a conveying system (16) which can move the vehicle bodies (10) to be treated up to the dipping basin (38, 40, 42), into the interior of the dipping basin (38, 40, 42), out of the dipping basin (38, 40, 42) and away from the latter and which comprises at least one transport unit (18) which carries a fastening device (24; 24, 36) therewith, via which the vehicle body (10) is couplable to the transport unit (18);
wherein:
c) the at least one transport unit (18) is a multi-axis conveying robot (18) with a chassis (20), which is movable along a travelling axis (VA), **characterized in that** the conveying robot (18) comprises a robot arm (22) with an arm joint (22a), which carries the fastening device (24; 24, 36) which is formed by a robot handpiece (24) or by a robot handpiece (24) and an adaptor (36) ;
d) the robot handpiece (24) is assigned two movement axes (BA1, BA2) which are perpendicular to each other;
e) a movement axis (BA3) is predetermined by the arm joint (22a);
f) the robot arm (22) is pivotable upwards and downwards about a horizontal movement axis (BA4) at the end remote from the robot handpiece (24) and is rotatable about a vertical movement axis (BA5) in relation to the chassis (20).

2. Dipping-treatment installation according to Claim 1, **characterized in that** the fastening device (24; 24, 36) is configured in such a manner that it is couplable directly to a vehicle body (10) and/or is couplable to a supporting structure (32) which is connected to the vehicle body (10).

3. Dipping-treatment installation according to Claim 1 or 2, **characterized in that** there are a plurality of dipping basins (38, 40, 42) which are arranged on one side or on both sides next to a path of movement (26; 28) of the conveying robot (18).

4. Dipping-treatment installation according to one of Claims 1 to 3, **characterized in that** a horizontal movement axis (BA4) of the conveying robot (18), said movement axis being located at the lowest point with respect to the path of movement (26; 28), is located above the upper edge of the dipping basin or the dipping basins (38, 40, 42).

5. Dipping treatment installation according to one of Claims 1 to 4, **characterized in that** a) there are at least one first treatment zone (60, 62) with a first path of movement (28a, 28b) and a first conveying robot (18a, 18b) and a second treatment zone (62, 64) with a second path of movement (28b, 28c) and a second conveying robot (18b, 18c), to each of which treatment zones at least one dipping basin (38, 40, 42) is assigned;
b) a transfer device (66a, 66b) is arranged between the first and the second treatment zone (60, 62, 64), by means of which a vehicle body (10) can be transferred from the first conveying robot (18a, 18b) to the second conveying robot (18b, 18c).

6. Dipping-treatment installation according to one of Claims 1 to 5, **characterized in that** one or more dipping basins (38, 40, 42) which each define a basin longitudinal direction (BL) are arranged in such a manner that their basin longitudinal direction (BL) runs at an angle to the travelling axis (VA) of the conveying robot (18) that is different than 0°.

7. Dipping-treatment installation according to Claim 6, **characterized in that** the angle of the basin longitudinal direction (BL) with respect to the travelling axis (VA) of the conveying robot (18) is 90°.

8. Method for operating a dipping-treatment installation for vehicle bodies, in which vehicle bodies (10) to be treated are moved by means of a conveying system (16) up to a dipping basin (38, 40, 42), into the interior of the dipping basin (38, 40, 42), out of the dipping basin (38, 40, 42) and away from the latter,
wherein
vehicle bodies (10) to be treated are transported at least from a first dipping basin (38, 40, 42) to a second dipping basin (38, 40, 42) by means of at least one multi-axis conveying robot (18) with a chassis (20), which is movable along a travelling axis (VA), **characterized in that** the conveying robot comprises a robot arm (22) with an arm joint (22a), wherein the robot arm (22) carries a fastening device (24; 24, 36) which is formed by a robot handpiece (24) or by a robot handpiece (24) and an adaptor (36),
and wherein the robot handpiece (24) is assigned two movement axes (BA1, BA2) which are perpendicular to each other, a movement axis (BA3) is predetermined by the arm joint (22a), and the robot arm (22) is pivotable upwards and downwards about a horizontal movement axis (BA4) at the end remote from the robot handpiece (24) and is rotatable about a vertical movement axis (BA5) in relation to the chassis (20).

## Revendications

1. Installation de traitement par immersion pour carrosseries de véhicules, comprenant
a) au moins une cuve d'immersion (38, 40, 42) qui peut être remplie d'un liquide de traitement (F) dans lequel les carrosseries de véhicules (10) à traiter peuvent être immergées ;
b) un système de transport (16) qui peut approcher les carrosseries de véhicules (10) à traiter de la cuve d'immersion (38, 40, 42), les immerger à l'intérieur de la cuve d'immersion (38, 40, 42), les sortir de la cuve d'immersion (38, 40, 42) et les éloigner de celle-ci, et qui comprend au moins une unité de transport (18) qui emporte avec elle un dispositif de fixation (24 ; 24, 36) au moyen duquel la carrosserie de véhicule (10) peut être accouplée à l'unité de transport(18);
dans laquelle :
c) ladite au moins une unité de transport (18) est un robot de transport multi-axes (18) doté d'un châssis (20) qui est déplaçable le long d'un axe de déplacement (VA), **caractérisée en ce que** le robot de transport (18) comprend un bras de robot (22) avec une articulation de bras (22a), lequel porte le dispositif de fixation (24 ; 24, 36) qui est formé par une pièce à main de robot (24) ou par une pièce à main de robot (24) et un adaptateur (36) ;
d) deux axes de mouvement (BA1, BA2) perpendiculaires sont associés à la pièce à main de robot (24) ;
e) un axe de mouvement (BA3) est défini par l'articulation de bras (22a) ;
f) à l'extrémité opposée à la pièce à main de robot (24), le bras de robot (22) peut pivoter vers le haut et le bas autour d'un axe de mouvement horizontal (BA4) et tourner par rapport au châssis (20) autour d'un axe de mouvement vertical (BA5).

2. Installation de traitement par immersion selon la revendication 1, **caractérisée en ce que** le dispositif de fixation (24 ; 24, 36) est conçu pour pouvoir être accouplé directement à une carrosserie de véhicule (10) et/ou pouvoir être accouplé à une structure porteuse (32) qui est reliée à la carrosserie de véhicule (10).

3. Installation de traitement par immersion selon la revendication 1 ou 2, **caractérisée en ce que** plusieurs cuves d'immersion (38, 40, 42) sont prévues, qui sont disposées d'un côté ou des deux côtés à proximité d'une voie de circulation (26 ; 28) du robot de transport (18).

4. Installation de traitement par immersion selon l'une des revendications 1 à 3, **caractérisée en ce qu'**un axe de mouvement horizontal (BA4) du robot de transport (18) situé le plus bas par rapport à la voie de circulation (26 ; 28) est placé au-dessus du bord supérieur de la ou des cuves d'immersion (38, 40, 42).

5. Installation de traitement par immersion selon l'une des revendications 1 à 4, **caractérisée en ce que**
a) au moins une première zone de traitement (60, 62) avec une première voie de circulation (28a, 28b) et un premier robot de transport (18a, 18b) et une deuxième zone de traitement (62, 64) avec une deuxième voie de circulation (28b, 28c) et un deuxième robot de transport (18b, 18c) sont prévues, à chacune desquelles est associée au moins une cuve d'immersion (38, 40, 42) ;
b) entre la première et la deuxième zone de traitement (60, 62, 64) est disposé un dispositif de transfert (66a, 66b) au moyen duquel une carrosserie de véhicule (10) peut être transférée du premier robot de transport (18a, 18b) au deuxième robot de transport (18b, 18c).

6. Installation de traitement par immersion selon l'une des revendications 1 à 5, **caractérisée en ce qu'**une ou plusieurs cuves d'immersion (38, 40, 42), qui définissent chacune une direction longitudinale de cuve (BL), sont disposées de telle sorte que leur direction longitudinale de cuve (BL) fasse avec l'axe de déplacement (VA) du robot de transport (18) un angle qui est différent de 0°.

7. Installation de traitement par immersion selon la revendication 6, **caractérisée en ce que** l'angle entre la direction longitudinale de cuve (BL) et l'axe de déplacement (VA) du robot de transport (18) est de 90°.

8. Procédé de fonctionnement d'une installation de traitement par immersion pour carrosseries de véhicule, selon lequel des carrosseries de véhicule (10) à traiter sont approchées de la cuve d'immersion (38, 40, 42), immergées à l'intérieur de la cuve d'immersion (38, 40, 42), sorties de la cuve d'immersion (38, 40, 42) et éloignées de celle-ci au moyen d'un système de transport (16), selon lequel les carrosseries de véhicule (10) à traiter sont transportées au moins d'une première cuve d'immersion (38, 40, 42) vers une deuxième cuve d'immersion (38, 40, 42) au moyen d'au moins un robot de transport multi-axes (18) doté d'un châssis (20) qui est déplaçable le long d'un axe de déplacement (VA), **caractérisé en ce que** le robot de transport comprend un bras de robot (22) avec une articulation de bras (22a),
lequel bras de robot (22) porte un dispositif de fixation (24 ; 24, 36) qui est formé par une pièce à main de robot (24) ou par une pièce à main de robot (24) et un adaptateur (36) ;
et selon lequel deux axes de mouvement (BA1, BA2) perpendiculaires sont associés à la pièce à main de robot (24), un axe de mouvement (BA3) est défini par l'articulation de bras (22a) et, à l'extrémité opposée à la pièce à main de robot (24), le bras de robot (22) peut pivoter vers le haut et le bas autour d'un axe de mouvement horizontal (BA4) et tourner par rapport au châssis (20) autour d'un axe de mouvement vertical (BA5).
